# EUROPEAN PATENT APPLICATION

(11) **EP 3 813 039 A1**
(43) Date of publication of application: **28.04.2021**
(21) Application number: 19382926.4
(22) Date of filing: 24.10.2019
(51) Int. Cl.: G08G 5/00, G08G 5/06, H04N 7/18, G06T 7/70, G06K 9/00

(54) **METHOD OF OBSERVING A GROUND TRAFFIC WITHIN AN AIRPORT**

(71) Applicant: thyssenkrupp Airport Solutions, S.A., 33682 Mieres (Asturias) (ES)
(72) Inventor: Martinez, Martin, 23173 Anderslöv (SE)
(74) Representative: Jacobi, Nicolas

(57) **Abstract**

Method of observing a ground traffic within an airport,
the method comprising:
optically **recording** recorded images (11, 12) of an apron area by at least one camera (C1, C2), wherein the camera creates a top view image (11, 12) of the apron area and is located in particular located at an elevation of at least 10m above ground.

## Description

The invention refers to a method of observing a ground traffic within an airport The airport traffic is steadily increasing. Besides the number aircraft movement as well as the degree of capacity utilization of the aircraft is increasing. This leads to more demand on the management of the ground traffic in airports.

Ground Traffic Movement can be observed by Airport Surface Detection Equipment, which employs radar for detecting any objects within the ground at an airport. The radar is merely capable of detecting an object without identifying the object. For identifying the detected object other technologies needs to be used at the same time.

Non published DE 10 2019 205 882.5 describes an airport ground traffic visualization system. Here the system tracks the movement of aircraft on the apron ground with the help of ADS-B signals. On a display a graphical representation of the aircraft is shown in a position, which corresponds to the position data received via ADS-B.

It is an object to provide an improved way of tracking the ground movement of aircrafts on within an airport. This is solved by the method and system according to the main claims; embodiments are subject of the subclaims and the description.

The inventive Apron ground traffic visualization system is adapted to provide a visualization of the airport ground traffic. The system comprising a first receiver adapted to receive transponder signals sent by a plurality of aircrafts, a plurality of second receivers each adapted to receive transponder signals sent by at least one aircraft, a signal processor is adapted to retrieve a positional information and an identification information from any of the received signals, a display. The display is adapted to display a graphical representation of a plurality of aircrafts, in particular of all aircrafts located on the airport, and a graphical representation of facilities of the airport. The system is adapted so that the graphical representation of the aircrafts is arranged in a spatial relation to the graphical representation of the facilities, wherein the spatial relation of the representations to the actual position of the related aircraft in relation to the related airport facilities.

With the help of the inventive method an operator located at a distant position can get a visual impression of the situation on the apron, in particular where currently aircrafts are positioned and how the aircrafts are moving between the facilities in and around the apron. Instead of using radar technology the transponder data deliver the data of the position and identification of the aircrafts. Based on the received data the system generates a visual representation of the situation and displays it to the operator.

The system then displays the aircraft at their current location as well as their current motion. Besides that the system displays also any other object present on the apron, which may be an obstacle.

The position data of the aircraft, processed based on the recorded images can be verified by any ADS-B signals which are sent out by the aircrafts. If a processed position of an aircraft does not match to a position data received via ADS-B, the method can set the system into a fault mode, in particular in which an error message is provided.

All embodiments and advantages described in connection with the system are also applicable to the method and vice versa.

The invention is described in more detail with reference to the figures, herein shows
figure 1 a top view on an airport;
figure 2 a side view on an apron area of the airport of figure 1;
figure 3 a top view on the apron area of figure 1;
figure 4 shows several images of the apron area of figure 1 created by the cameras
figure 5 a schematic view of a observation system using the inventive method
figure 6 a sequence if corrected images of a parking procedure and the respective display on a VDGS.

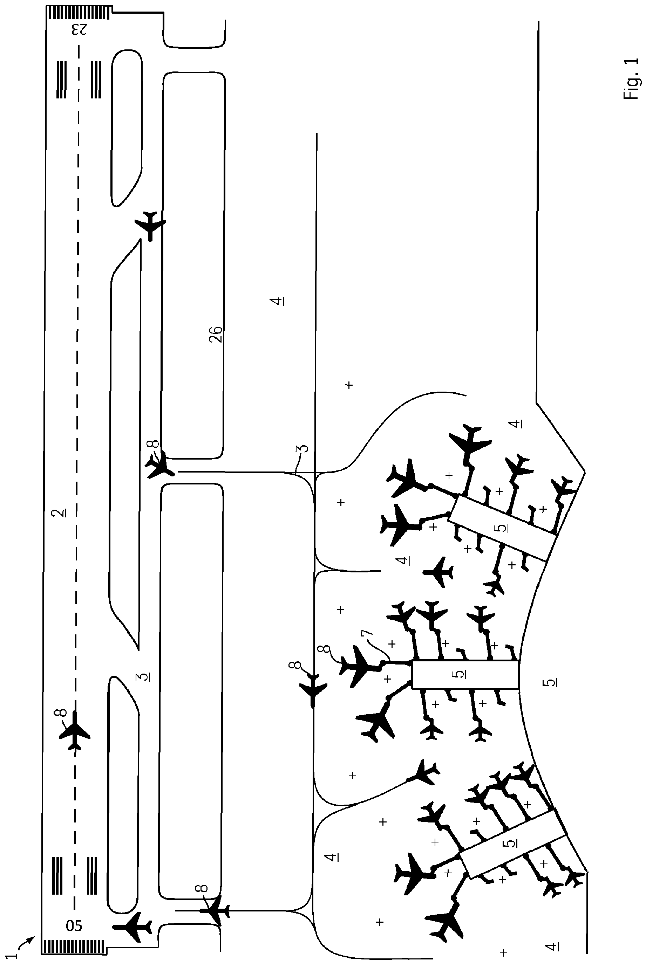

In figure 1 an airport 1 is shown. As usual the airport 1 comprises several facilities.

A main terminal 5 building having a plurality of gates 6, which can be connected by a passenger boarding bridge ("PBB") 7 to an aircraft 8 parked at one of a plurality of terminal parking positions 23.

The airport comprises further a runway 2 for take-off and landing, and a taxiway 3 as a connecting path between the runway 2 and the parking position. Several aircrafts 8 are moving on the ground of the aircraft and, either on the runway 2, the taxiways 3 or anywhere else on the apron 4.

To illuminate the apron 4 a flood light is provided, comprising a plurality of flood light masts, the positions of which are depicted by + in figure 1.

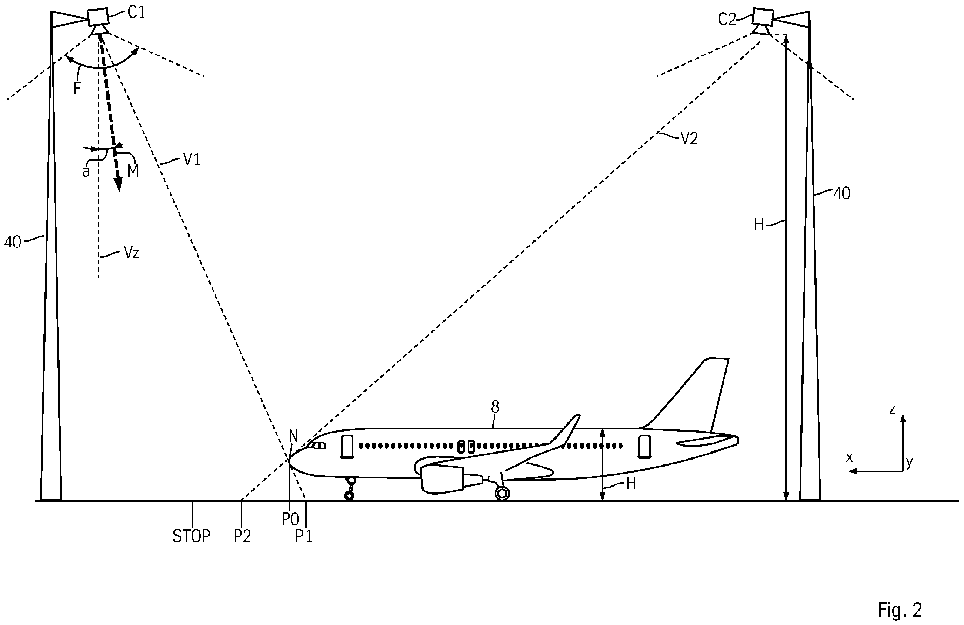

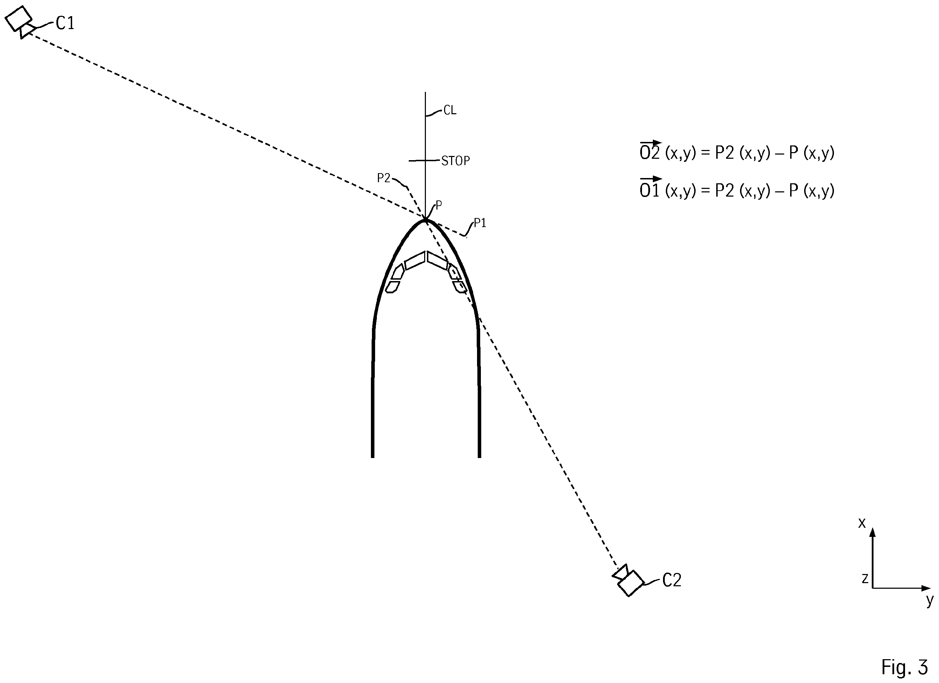

Figures 2 and 3 show (at least partially) an aircraft 8 located on the apron. Cameras C1, C2 are located on flood light masts 40 at a certain elevation height H. The aircraft is at least partially located within the field of view of at least one of the cameras. Even if there shown two cameras, it is preferred that there are a plurality of cameras directed to a certain areas of the apron.

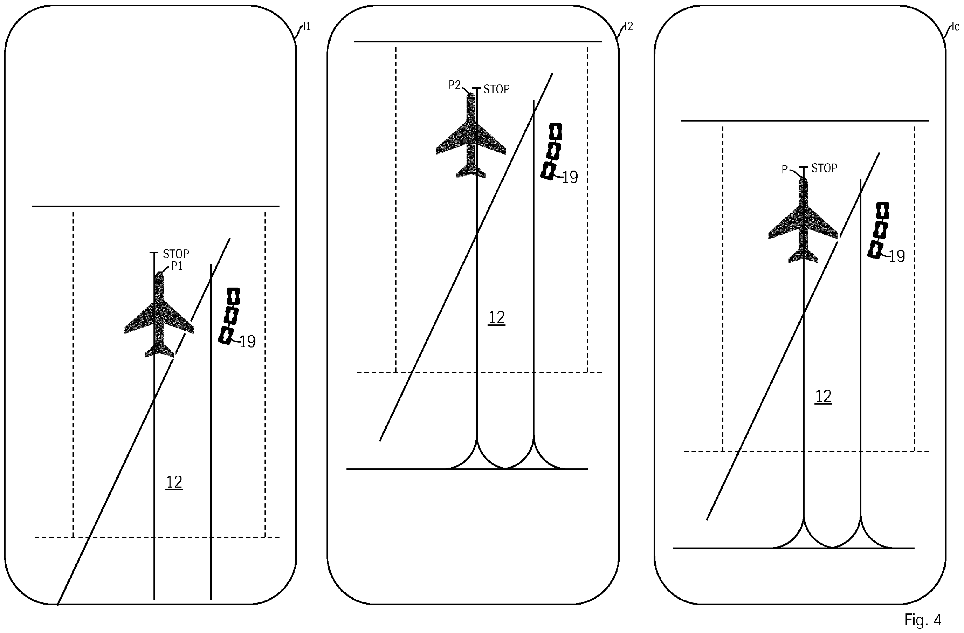

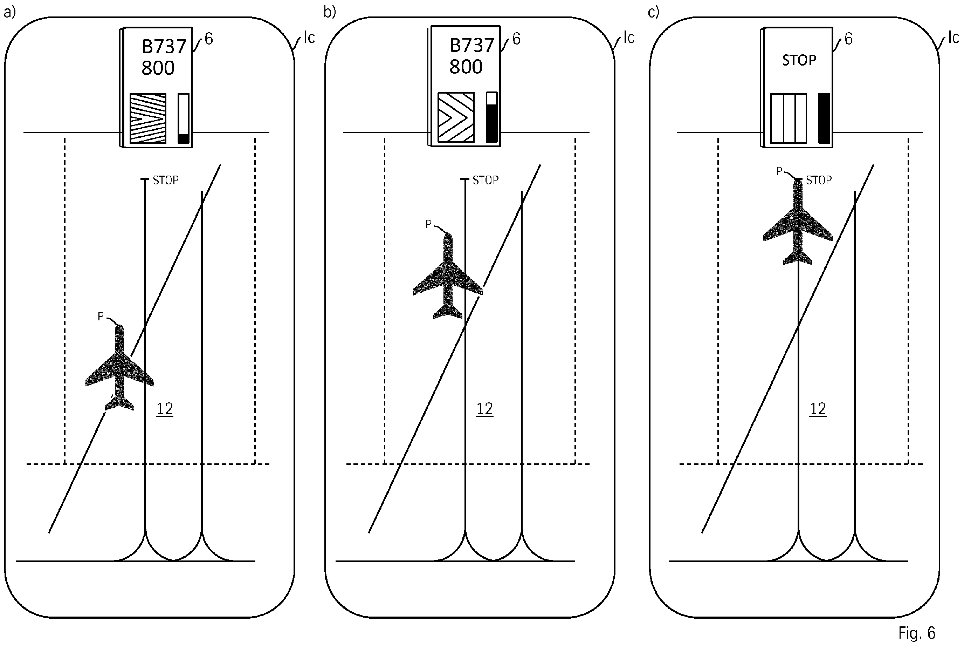

The cameras are adapted to record a top view image I1, I2 (see figures 4 and 6) of the apron. That includes in particular at least some of the following features: The elevation height H is at least 10, in particular at least 15m or at least 20m. A mean direction of view M is at least oriented at an angle a relative to the vertical direction z of max. 45°, in particular max 30°, more particular of max 10°. The field of view F includes a vertical line vision Vz, parallel to the vertical z-direction).

The cameras can record images of at least parts of the aircraft. For determining the position of the aircraft in particular the nose N of the aircraft is of relevance.

The cameras are not located exactly above the aircraft 8. So depending on the lateral position of the cameras relative to the aircraft the cameras merely record a stretched top view picture of the apron and the aircraft 8. So a line of view V1 between the first camera C1 and the nose N hits the apron ground at a position P1, which has a first offset 01 from the correct position; another line of view V2 between the second camera C2 and the nose N hits the apron ground at a position P2, which has a second offset 02 from the correct position P.

Figure 4 shows Images of the apron. A first image I1 is taken by first camera C1. The first image I1 shows the nose N at position P1. Position P1 is consequently merely a seeming position. A second image 12 is taken by second camera C2. The second image 12 shows the nose N at position P2. Position P2 is consequently also merely a seeming position.

A third image Ic is a corrected image. Based on spatial data the image of the aircraft is shifted on the background of the image (established by the apron ground) into the correct position P. In the corrected image Ic the aircraft is shown in the correct position.

Determining the correct position of the aircraft 8 is be performed by using 3D cameras as the cameras C1 and C2. Here the spatial coordinates of parts of the elements presented in the picture can be calculated. For example the correct position P of the nose N can be calculated independently form the direction of view V1, V2. The seeming positions P1, P2 can be measured by means of the calibrated cameras and the resulting images I1, 12. Consequently the offsets 01, 02 can be calculated as depicted in figure 3. Subsequently the presentation of the aircraft is shifted in image I1 and/or 12 to establish the corrected image Ic. Alternatively or in combination thereto the first and second images can be merged into the corrected picture Ic.

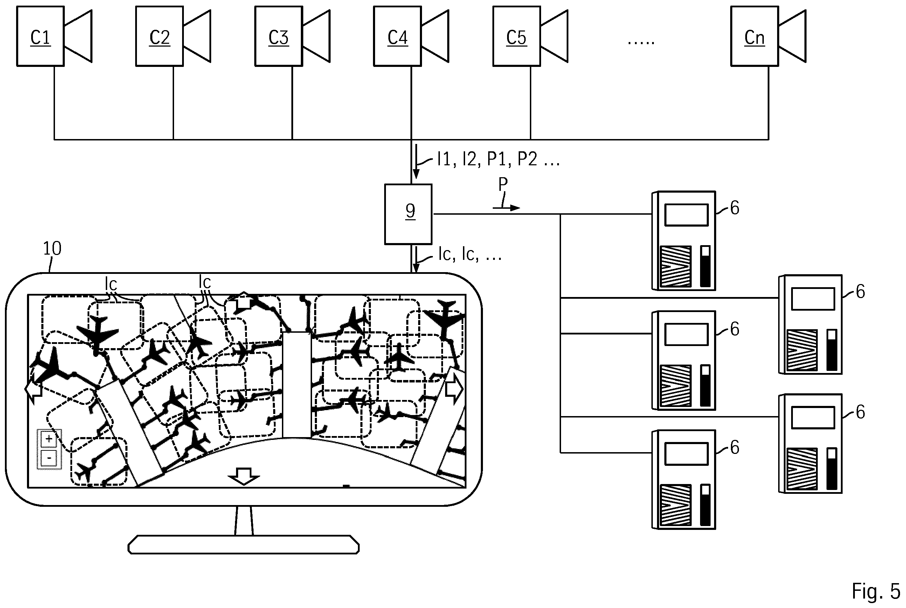

Figure 5 shows a central observation monitor 10 at the airport or at another remote location. Herein a plurality of corrected images Ic as above described are displayed to generate a real time overview of wide areas of the apron, which is larger than the field of view of one particular camera. Each dotted frames in the monitor 10 stands for a separate corrected image Ic.

The corrected image is generated by at least one processing unit 9, probably a microcomputer. The processing unit can be a central computer as in figure 4; alternatively the processing unit can be located decentral e.g. at the cameras.

The display is also able to show any other objects 19 in their current position, in particular a baggage trolley as shown in the images of figure 4. The object can be any other in particular moving object which may constitute an obstacle.

The term real time is meant that an average repetition rate of corrected pictures is maximum 5 seconds, preferred max 1 second, for an image, in which the aircraft is moving. In particular the average repetition rate is max 0,2 seconds, in particular for safety relevant observations. That means the image shown in the central observation station is not older than the repetition rate. For stationary situations, i.e. in which the aircraft is not moving, the repetition rate can significantly higher.

The results of the calculations performed by the processing unit or units 9 are also used for operating the VDGS (Visual docking guidance system) 6 which are used at the airport assisting the pilot of the aircrafts during parking the aircraft. A generic VDGS is disclosed in EP 2 660 152 A2. As described above the processing unit can calculate the position P of the aircraft. From that a distance in x and y direction to the intended stop position can be calculated. This distance is then used for operating the VDGS 6. Figure 6 shows a sequence of corrected images and the respective display of the VDGS 6 during a parking procedure.

### List or reference signs

- 1: airport
- 2: runway
- 3: taxiway
- 4: apron
- 5: main terminal building
- 6: VDGS
- 7: passenger boarding bridge
- 8: aircraft
- 9: processing unit
- 10: central observation monitor
- 19: moving object, non aircraft
- 23: terminal parking position
- 24: remote parking positions
- 25: apron building
- 26: tower
- 40: flood light mast

- N: nose of aircraft
- P: correct position
- P1, P2: seeming position in image
- O1, O2: offset between seeming and correct position
- V1, V2: line of view
- C1, C2: camera
- F: field of view
- M: mean direction of view
- a: angle between mean direction of view and vertical direction
- CL: centerline
- STOP: stop position
- I1, I2: images taken by camera C1, C2
- Ic: corrected image
- +: position of flood light mast

## Claims

1. Method of observing a ground traffic within an airport,
the method comprising:
optically **recording** recorded images (I1, I2) of an apron area by at least one camera (C1, C2),
wherein the camera creates a top view image (I1, I2) of the apron area and is located in particular located at an elevation of at least 10m above ground.

2. Method according to the preceding claim,
wherein based on the recorded images a position (P) of an aircraft (8) is calculated, in particular the calculation is performed continuously.

3. Method according to any of the preceding claims,
wherein the camera (C1, C2) is located on a flood light mast (40),
and/or
wherein the camera is located at a height (H) of at least 10 meters higher than the height (H8) of an aircraft (8) fuselage which is located in a field of view of the camera.

4. Method according to any of the preceding claims,
**processing** the recorded images (I1, I2) to generate a corrected image (Ic) of the apron area.

5. Method according to the preceding claims,
wherein due to a stretched view on the apron the aircraft is shown in the recorded image in a seeming position (P1, P2), wherein the seeming position deviates from the correct position,
the step of **processing** comprises: **amending** the displayed position of the aircraft within the image, so that the aircraft is shown in the corrected image in the correct position (P).

6. Method according to any of the preceding claims,
wherein a plurality of corrected images (Ic) are merged and displayed on single monitor (10), so that an, in particular seemless, apron area is displayed, which is larger than the area covered by the field of view of the individual cameras (C12, C2, ...Cn) contributing images to the plurality of images.

7. Method according to any of the preceding claim and claim 2,
wherein the position (P) of the aircraft is used to assist the pilot of the aircraft during parking the aircraft at an airport gate,
in particular the determined position is used as a positional input value for a Visual Docking guidance system (6).

8. Observing system adapted to observe a ground traffic on an airport apron (4),
in particular adapted to perform a method according to any of the preceding claims; comprising
at least one camera (C1, C2), in particular a plurality of cameras, adapted to privde a top view image of an apron area.
a processing unit (9) adapted to process images (I1, I2) recorded by the at least one camera.

9. Observing system according to the preceding claim,
comprising a display (10),
wherein the system is adapted so to display on the display (10) a corrected image (Ic), in which the an aircraft currently located at the apron is shown in a corrected position, wherein the recorded image shows the aircraft is an seeming position, deviating from the correct position.

10. Observing system according to claim 8 or 9,
comprising at least one Visual Docking guidance system, which is installed at the airport and which provides visual parking instruction to the pilot of a aircraft parking at an airport gate,
wherein the VDGS (6) is adapted to operate based on the image (I1, I2) or based on at least a positional value (P) processed based on the images (I1, I2).
